# EUROPÄISCHE PATENTSCHRIFT

(11) **EP 2 718 170 B1**
(45) Veröffentlichungstag und Bekanntmachung des Hinweises auf die Patenterteilung: **10.06.2015**
(21) Anmeldenummer: 12716458.0
(22) Anmeldetag: 26.04.2012
(51) Int. Cl.: B62D 5/04

(54) **LENKSYSTEM IN EINEM FAHRZEUG**
STEERING SYSTEM IN A VEHICLE
SYSTÈME DE DIRECTION SITUÉ DANS UN VÉHICULE

(30) Priorität: 10.06.2011 DE 102011051000; 14.10.2011 DE 102011084505
(43) Veröffentlichungstag der Anmeldung: 16.04.2014
(73) Patentinhaber: Robert Bosch GmbH, 70442 Stuttgart (DE)
(72) Erfinder: NEUBAUER, Achim, 76547 Sinzheim-Vormberg (DE)
(86) Internationale Anmeldenummer: PCT/EP2012/057596
(87) Internationale Veröffentlichungsnummer: WO 2012/167997

(56) Entgegenhaltungen:
- EP-A1- 1 920 991
- EP-A1- 1 955 927
- EP-A1- 2 244 359
- DE-A1-102005 060 282

## Beschreibung

Die Erfindung bezieht sich auf ein Lenksystem in einem Fahrzeug nach dem Oberbegriff des Anspruches 1.

### Stand der Technik

Aus der DE 197 03 903 A1 ist ein Lenksystem in einem Fahrzeug bekannt, über das ein vom Fahrer vorgegebener Lenkwinkel in einen Radlenkwinkel der lenkbaren Fahrzeugräder umsetzbar ist. Das Lenksystem umfasst eine Lenkwelle und eine mit der Lenkwelle gekoppelte Zahnstange, die bei einer Lenkwellendrehung zur Einstellung des Radlenkwinkels in Querrichtung verschoben wird. Zur Lenkkraftunterstützung ist dem Lenksystem ein elektrischer Servomotor zugeordnet, dessen Rotor die Lenkwelle mit einem unterstützenden Moment beaufschlagt.

Die DE 10 2005 060 282 A1 ist als nächstliegender Stand der Technik nach dem Oberbegriff des Anspruchs 1 zu sehen und zeigt eine elektrische Servolenkungseinrichtung mit einem elektrischen Servomotor, der eine Steuereinheit zum Steuern des Servomotors aufweist, wobei die Steuereinheit der Stirnseite der Motorwelle axial vorgelagert ist. Die Steuereinheit umfasst eine Leistungsplatine und eine Steuerplatine, die in einer gemeinsamen Ebene senkrecht zur Längsachse der Motorwelle liegen und nebeneinander liegend angeordnet sind. Dadurch ergibt sich in Radialrichtung ein verhältnismäßig großer Raumbedarf. Die Leistungsplatine und die Steuerplatine sind als separate Platinen ausgebildet und müssen in separaten Arbeitsschritten gefertigt werden.

Die EP 1 955 927 A1 zeigt einen elektrischen Servomotor für ein Lenksystem, bei dem ein Steuergerät auf der der Motorwelle gegenüberliegenden Seite angeordnet ist.

Die EP 1 920 991 A1 zeigt ebenfalls einen elektrischen Servomotor für ein Lenksystem, bei dem eine Leistungselektronik und eine Steuerelektronik auf verschiedenen Platinen angeordnet und die Platinen in einem gemeinsamen Elektronikgehäuse aufgenommen sind. Die Leistungselektronik und die Steuerelektronik liegen jeweifs parallel zur Längsachse des Servomotors.

Gemäß der EP 2 244 359 A1 ist eine Steuerelektronik in einem Gehäuse angeordnet, das dem Motorgehäuse des Servomotors axial vorgelagert ist.

### Offenbarung der Erfindung

Der Erfindung liegt die Aufgabe zugrunde, ein Lenksystem in einem Fahrzeug mit einfachen konstruktiven Maßnahmen mit kompakter Lenkunterstützung auszubilden.

Diese Aufgabe wird erfindungsgemäß mit den Merkmalen des Anspruches 1 gelöst. Die Unteransprüche geben zweckmäßige Weiterbildungen an.

Das erfindungsgemäße Lenksystem wird in Fahrzeugen zur Umsetzung des vom Fahrer vorgegebenen Lenkwinkels in einen Radlenkwinkel der lenkbaren Räder eingesetzt. Das Lenksystem umfasst eine Lenkspindel bzw. -welle, die mit einem vom Fahrer betätigbaren Lenkrad verbunden ist, sowie ein Lenkgestänge mit einer Zahnstange, die von der Lenkwelle betätigbar ist und über die der gewünschte Winkel an den lenkbaren Rädern eingestellt wird.

Des Weiteren ist dem Lenksystem ein elektrischer Servomotor zur Erzeugung eines unterstützenden Antriebsmomentes zugeordnet, der mit der Lenkwelle gekoppelt ist. Bei einer Betätigung des Servomotors wird die Drehbewegung der Lenkwelle mit einem unterstützenden Moment beaufschlagt. Die kinematische Kopplung zwischen dem Servomotor und der Lenkwelle erfolgt über ein Getriebe, beispielsweise über eine Schnecke und ein Schneckenrad, wobei die Schnecke mit der Motorwelle des Servomotors verbunden und das Schneckenrad drehfest mit der Lenkwelle gekoppelt ist. Zweckmäßigerweise befindet sich die Schnecke auf einem einteilig mit der Motorwelle ausgebildeten, den Stator des Servomotors axial überragenden Wellenabschnitt.

Des Weiteren ist vorgesehen, dass eine Elektronikeinheit wie zum Beispiel eine Leiterplatte bzw. Elektronikptatine mit elektronischen Komponenten zur Steuerung des Servomotors orthogonal zur Längsachse des Servomotors angeordnet ist. Die Elektronikeinheit ist der Stirnseite der Motorwelle des Servomotors axial vorgelagert. Diese Ausführung hat den Vorteil, dass der der Motorwelle axial vorgelagerte Bereich für die Anordnung zumindest eines Teils der elektronischen Komponenten genutzt werden kann, welche für die Steuerung des elektrischen Servomotors erforderlich sind. Es wird auf diese Weise eine bessere Raumausnutzung und damit insgesamt eine kompaktere, kleiner bauende Ausführung im Bereich der Lenkkraftunterstützung des Lenksystems erreicht.

Ein weiterer Vorteil liegt darin, dass in die der Stirnseite der Motorwelle axial vorgelagerte Elektronikeinheit ein Magnetfeldsensor integriert werden kann, der Teil einer Rotorlagesensorik zur Bestimmung der aktuellen Winkellage der Motorwelle ist. Der Magnetfeldsensor auf der Elektronikeinheit registriert das sich drehende Magnetfeld eines Magnetelementes, welches an der zugewandten Stirnseite der Motorwelle angeordnet ist und gemeinsam mit der Motorwelle umläuft. Der Magnetfeldsensor und das Magnetelement bilden gemeinsam die Rotorlagesensorik. Über die Positionierung der Elektronikeinheit an der axialen Stirnseite der Motorwelle kann somit der Magnetfeldsensor ebenfalls Raum sparend angeordnet werden.

Gemäß einer weiteren zweckmäßigen Ausführung ist die Elektronikeinheit in einem Elektronikgehäuse aufgenommen, das in einer festen Position zum Servomotor angeordnet ist. Zweckmäßigerweise enthält das Elektronikgehäuse sowohl eine Leistungselektronik als auch eine die Steuerungslogik aufweisende Steuerungselektronik. Hierbei kann es zweckmäßig sein, die Elektronikeinheiten - die Leistungselektronik und die Steuerungselektronik - orthogonal zueinander auszurichten, was die Möglichkeit eröffnet, eine der Elektronikeinheiten parallel versetzt zur Motorwelle anzuordnen. Die parallel zur Motorwelle versetzt angeordnete Elektronikeinheit stellt ebenfalls eine Raum sparende Ausführung dar. Zweckmäßigerweise handelt es sich bei der Elektronikeinheit, welche orthogonal zur Motorwelle des Servomotors gerichtet und der Stirnseite der Motorwelle axial vorgelagert ist, um die die Steuerungslogik enthaltene Platine, wohingegen die Elektronikeinheit parallel versetzt zur Motorwelle die Leistungselektronik enthält. Grundsätzlich möglich ist aber auch eine umgekehrte Anordnung von Steuerungs- und Leistungselektronik.

Die orthogonal zur Motorwelle ausgerichtete Elektronikplatine kann sowohl im Bereich der freien, dem Stator abgewandten Stirnseite der Motorwelle als auch unmittelbar dem Stator an dessen Rückseite benachbart positioniert sein. Auch im letztgenannten Fall befindet sich die Elektronikplatine in einem rechten Winkel zur Motorwellenlängsachse und ist der Stirnseite der Motorwelle axial vorgelagert.

Vorteilhafterweise sind die Lenkwelle und der elektrische Servomotor in einem gemeinsamen Lagergehäuse aufgenommen. Das Lagergehäuse, das vorzugsweise aus Metall besteht, weist eine Aufnahmeöffnung zur Aufnahme der Lenkwelle auf sowie einen weiteren Gehäuseabschnitt zur Aufnahme des Servomotors. Dieser Gehäuseabschnitt umfasst ein Motorwellengehäuse zur Aufnahme der Motorwelle des Servomotors, wobei das Motorwellengehäuse sich zumindest annähernd orthogonal zur Lenkwellenachse erstreckt. Des Weiteren kann der dem Servomotor zugeordnete Gehäuseabschnitt ein Statorgehäuse zur Aufnahme des Stators des Servomotors umfassen. Sowohl für das Motorwellengehäuse als auch für das Statorgehäuse kommen sowohl einteilige als auch zweiteilige Ausführungen in Betracht. Bei der einteiligen Ausführung sind das Motorwellengehäuse sowie das Statorgehäuse einteilig mit dem Lagergehäuse ausgebildet. In der zweiteiligen Ausführung mit zwei Gehäuseschalen für das Motorwellengehäuse und das Statorgehäuse ist eine der Gehäuseschalen einteilig mit dem Lagergehäuse ausgebildet, wohingegen die zweite Gehäuseschale separat ausgeführt und auf die zugeordnete erste Gehäuseschale aufsetzbar ist.

Das Lagergehäuse ist auch Träger der Elektronikplatine sowie gegebenenfalls des Elektronikgehäuses zur Aufnahme der Elektronikplatine. Die Elektronikplatine ist je nach Anordnung entweder am Motorwellengehäuse oder am Statorgehäuse gelagert. In Betracht kommt auch eine Anordnung der Elektronik an einer Aufnahmeplattform, welche als ebene Platte ausgebildet ist und einteilig mit dem Lagergehäuse ausgeführt ist. Die Aufnahmeplattform nimmt vorzugsweise eine Elektronikeinheit auf, beispielsweise die Leistungselektronik, wobei sich ein weiterer Teil senkrecht zur Ebene der Befestigungsplattform erstreckt, die vorteilhafterweise achsparallel und versetzt zur Motorwellenachse angeordnet ist.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Ansicht eines Lenksystems in einem Fahrzeug, mit einem der Lenkwelle des Lenksystems zugeordneten Servomotor,
- Fig. 2: ein Lagergehäuse einschließlich Servomotor und einer den Servomotor steuernden Leistungs- und Steuerungselektronik,
- Fig. 3: die Ausführung gemäß Fig. 2, jedoch mit aufgesetzter Gehäuseschale des den Servomotor aufnehmenden Gehäuseabschnittes,
- Fig. 4: einen Schnitt durch ein Lagergehäuse zur Aufnahme der Lenkwelle und des Servomotors längs zur Motorwellenlängsachse,
- Fig. 5: ein Lagergehäuse mit Servomotor, auf dessen Motorwelle stirnseitig ein Magnetelement aufsetzbar ist, mit einer der Stirnseite der Motorwelle vorgelagerten Steuerungselektronik.

In den Figuren sind gleiche Bauteile mit gleichen Bezugszeichen versehen.

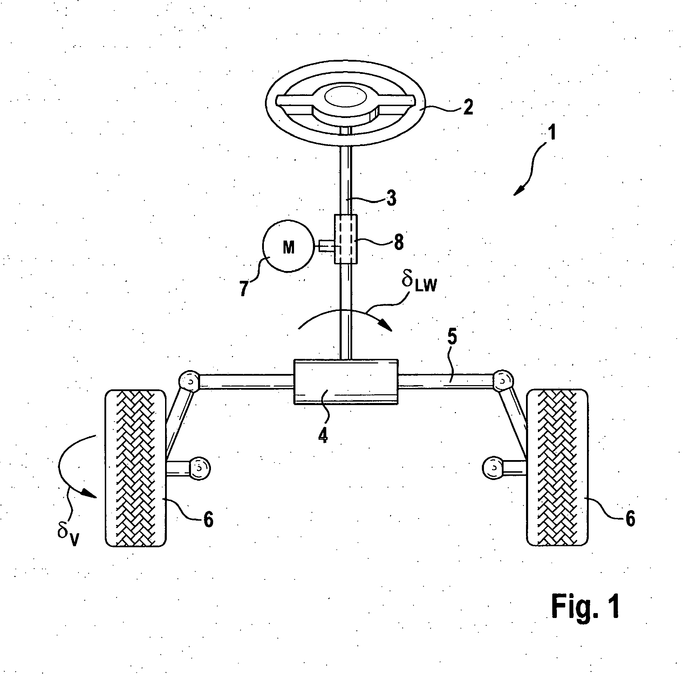

Das in Fig. 1 gezeigte Lenksystem 1 in einem Fahrzeug umfasst ein Lenkrad 2, eine Lenkwelle 3, ein Lenkgetriebe 4, ein Lenkgestänge 5 mit einer Zahnstange sowie lenkbare Räder 6. Der Fahrer gibt durch Betätigung des Lenkrades 2 einen Lenkwinkel δ_{LW} in der mit dem Lenkrad verbundenen Lenkwelle 3 vor, die über das Lenkgetriebe 4 die Zahnstange des Lenkgestänges 5 in Querrichtung verstellt, woraufhin an den lenkbaren Rädern der Radlenkwinkel δ_{V} eingestellt wird.

Zur Lenkkraftunterstützung dient ein elektrischer Servomotor 7, der über ein Getriebe ein unterstützendes Antriebsmoment in die Lenkwelle 3 einleitet. Das Getriebe umfasst eine Schnecke auf einem Wellenabschnitt der Motorwelle des Servomotors 7 und ein mit der Schnecke in Eingriff stehendes Schneckenrad, welche drehfest mit der Lenkwelle 3 verbunden ist. Die Lenkwelle 3 sowie die Motorwelle des elektrischen Servomotors 7 sind in einem Lagergehäuse 8 des Lenksystems 1 aufgenommen.

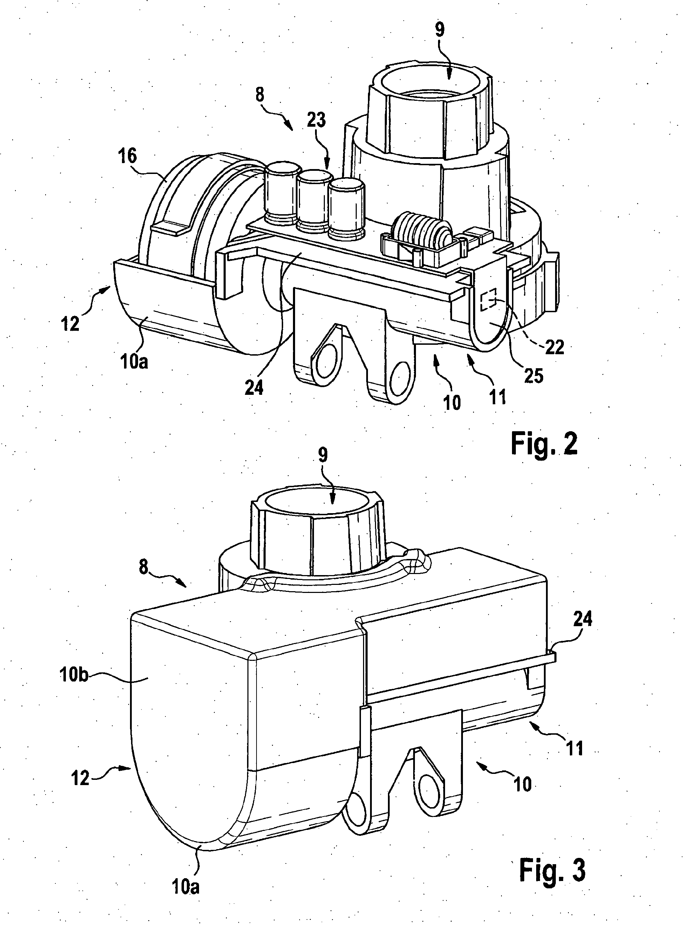

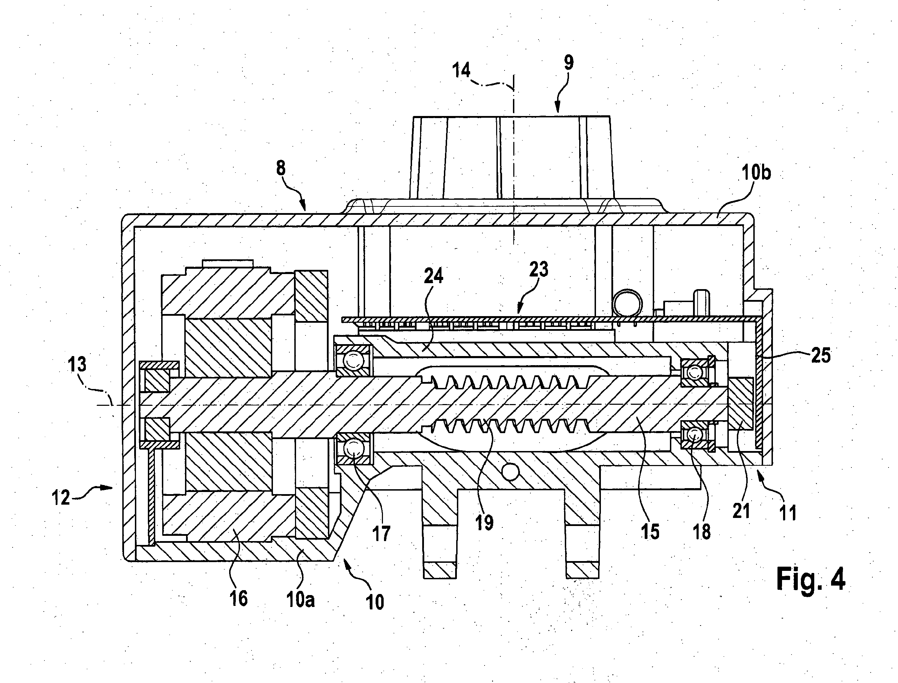

In den Figuren 2 und 3 sowie in der Schnittdarstellung gemäß Fig. 4 ist ein Ausführungsbeispiel mit einem Lagergehäuse 8 dargestellt, das mit einem zweigeteilten Motorlagergehäuse 10 versehen ist. Eine Gehäuseschale 10a des Motorlagergehäuses 10 ist einteilig mit dem Gehäuseabschnitt ausgebildet, der eine Aufnahmeöffnung 9 für die Lenkwelle aufweist. Eine zweite Gehäuseschale 10b ist auf die erste Gehäuseschale 10a aufsetzbar. Die erste und die zweite Gehäuseschale 10a, 10b sind nicht symmetrisch ausgebildet; die abnehmbare, zweite Gehäuseschale 10b weist im Bereich der statorseitigen Stirnseite einen vertikalen, torbogenförmigen Abschnitt auf, welcher in eine korrespondierende Ausnehmung an der gehäusefesten Gehäuseschale 10a einsetzbar ist.

Das Lagergehäuse 8 weist in einem ersten Gehäuseabschnitt eine Aufnahmeöffnung 9 für die Lenkwelle auf. Ein zweiter Gehäuseabschnitt des Lagergehäuses 8 bildet das Motorlagergehäuse 10 zur Aufnahme des elektrischen Servomotors 7, wobei sich die Längsachse 13 des Motorlagergehäuses 10 orthogonal und seitlich versetzt zur Längsachse 14 der Aufnahmeöffnung 9 bzw. der eingesetzten Lenkwelle erstreckt. Insgesamt setzt sich das Motorlagergehäuse 10 aus einem Motorwellengehäuse 11, in welchem die Motorwelle 15 des Servomotors 7 aufgenommen ist, und einem Statorgehäuse 12 zur Aufnahme des Stators 16 des Servomotors zusammen. Das Statorgehäuse 12 kann einteiliger Bestandteil des Motorlagergehäuses 10 sein. Möglich ist aber auch eine Ausführung, in der das Bauteil 12 lediglich eine Halterung zur Aufnahme des Stators 16 des Servomotors mit eigenem Statorgehäuse bildet, so dass grundsätzlich die Möglichkeit besteht, je nach Anforderung verschiedene Statoren zu verwenden oder über verschiedene Baureihen hinweg gleiche Statoren einzusetzen; das Statorgehäuse kann als Blechteil oder Kunststoffteil ausgeführt sein.

Die Motorwelle 15 ist in zwei gehäuseseitigen Einzellagern 17 und 18 gelagert, von denen das dem Stator 16 benachbarte Einzellager 17, welches axial dem Stator unmittelbar vorgelagert ist, als Loslager und das statorfeme Einzellager 18 als Festlager ausgebildet ist. Die beiden Einzellager 17 und 18 liegen axial auf gegenüberliegenden Seiten bezogen auf eine Schnecke 19, die mit dem in Fig. 4 andeutungsweise dargestellten Schneckenrad 20 kämmt, welches drehfest mit der Lenkwelle 3 verbunden ist. Das Einzellager 18 befindet sich benachbart zur freien Stirnseite der Motorwelle 15. Der gesamte, den Stator 16 axial überragende Wellenabschnitt, welcher auch Träger der Schnecke 19 ist, ist einteilig mit der Motorwelle 15 ausgeführt bzw. wird von der Motorwelle 15 gebildet. Dadurch ist die Lagerung der Motorwelle 15 im Lagergehäuse 8 mit lediglich zwei Einzellagern 17, 18 möglich.

In Fig. 2 und 4 ist außerdem eine Leistungselektronik 23 dargestellt, welche eine Reihe von Leistungselektronikkomponenten auf einer Platine zur Steuerung des Servomotors umfasst. Die Leistungselektronik 23 ist auf einer gehäuseseitigen Befestigungsplattform 24 angeordnet, die sich an das Statorgehäuse 12 anschließt und als ebene Platte ausgebildet ist, welche sich tangential zum Motorwellengehäuse 11 sowie parallel zur Motorwelle erstreckt. Auf der dem Stator 16 des Servomotors gegenüberliegenden Seite weist die Elektronik einen abgewinkelten Abschnitt 25 auf, der die Steuerungselektronik auf einer Leiterplatte bzw. Platine bildet. Die Steuerungselektronik 25 erstreckt sich orthogonal zur Motorwellenlängsachse 13 und befindet sich axial in geringem Abstand vor der freien Stirnseite der Motorwelle des Servomotors. Die Steuerungselektronik 25 kann ggf. einen Magnetfeldsensor 22 aufweisen, der das Magnetfeld eines Magnetelementes 21 sensiert, das an der freien Stirnseite der Motorwelle aufgesteckt ist und gemeinsam mit der Motorwelle 15 umläuft. Das Magnetelement 21 und der Magnetfeldsensor 22 bilden gemeinsam eine Rotorlagesensorik zur Ermittlung der aktuellen Drehlage der Motorwelle 15. Als Magnetfeldsensor 22 kommen GMR-Sensoren, AMR-Sensoren und Hallsensoren, insbesondere 3D-Hallsensoren in Betracht.

Die Leistungselektronik 23 und die Steuerungselektronik 25 sind vorzugsweise einteilig ausgebildet, beispielsweise in Form einer im abgewinkelten Knickplatine, in die Leiterbahnen zur Verbindung der jeweiligen elektronischen Komponenten auf den verschiedenen Abschnitten der Platine eingeätzt sind. Für die Signalübertragung von dem Magnetfeldsensor im Bereich der Steuerungselektronik 25 auf die Leistungselektronik 23 sind somit keine zusätzlichen Kabel erforderlich, vielmehr erfolgt die Signalübertragung über die Leiterbahnen. Die Knickplatine ist beispielsweise in einem 90°-Winkel abgewinkelt. Grundsätzlich kommen aber auch sonstige Winkelpositionen in Betracht.

Das Motorlagergehäuse 10 besteht vorzugsweise aus einem wärmeleitenden Material, insbesondere Metall, beispielsweise Aluminiumdruckguss, und ist dadurch in der Lage, die von der Leistungselektronik 23 entwickelte Wärme gut abzuleiten. Das Statorgehäuse kann ganz oder teilweise aus einem Kunststoffmaterial gefertigt sein; die Wärmeableitung erfogt in diesem Fall in erster Linie über das Motorlagergehäuse 10 aus wärmeleitendem Material.

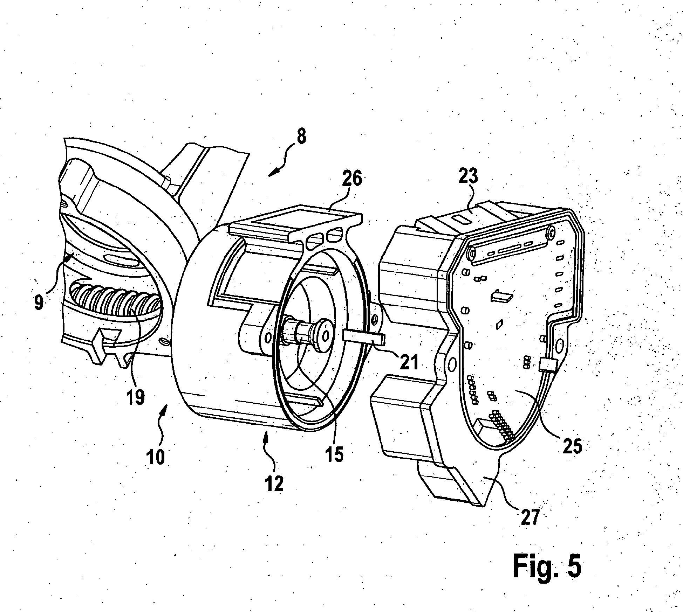

Im Ausführungsbeispiel gemäß Fig. 5 ist auf der Außenseite des zylindrischen Statorgehäuses 12 eine ebene Befestigungsplattform 26 angeordnet, die einteilig mit dem Statorgehäuse 12 ausgebildet ist. Die Befestigungsplattform 26 erstreckt sich tangential zum Statorgehäuse 12 und nimmt die Leistungselektronik 23 auf, die in einem Elektronikgehäuse 27 angeordnet ist. Zusätzlich zu der Leistungselektronik 23 ist in dem Elektronikgehäuse 27 auch die Steuerungselektronik 25 aufgenommen, welche sich bezogen auf die Leistungselektronik 23 in einem rechten Winkel erstreckt und orthogonal zur Motorwellenlängsachse verläuft. Im montierten Zustand ist die Steuerungselektronik 25 der statorseitigen Stirnseite der Motorwelle 15 axial vorgelagert, an der das Magnetelement 21 befestigt sein kann, dem ein Magnetfeldsensor auf der Platine der Steuerungselektronik 25 zugeordnet ist.

## Patentansprüche

1. Lenksystem in einem Fahrzeug, mit einer Lenkwelle (3) zur Übertragung eines vom Fahrer vorgegebenen Lenkwinkels und mit einem elektrischen Servomotor (7) zur Erzeugung eines unterstützenden Antriebsmoments, der mit der Lenkwelle (3) gekoppelt ist, wobei eine Elektronikeinheit (25) mit elektronischen Komponenten zur Steuerung des Servomotors (7) orthogonal zur Längsachse des Servomotors (13) angeordnet und der Stirnseite der Motorwelle (15) des Servomotors (7) axial vorgelagert ist, wobei die Elektronikeinheit (25) in einem Elektronikgehäuse (27) aufgenommen ist, das in einer festen Position zum Servomotor (7) angeordnet ist und das Elektronikgehäuse (27) eine Leistungselektronik (23) und eine Steuerungselektronik (25) aufnimmt, **dadurch gekennzeichnet, dass** die Leistungselektronik (23) und die Steuerungselektronik (25) winklig zueinander ausgerichtet und die Leistungselektronik (23) und die Steuerungselektronik (25) einteilig in Form einer Knickplatine ausgebildet sind.

2. Lenksystem nach Anspruch 1, **dadurch gekennzeichnet, dass** die Leistungselektrönik (23) und die Steuerungselektronik (25) in einem 90°- Winkel zueinander ausgerichtet sind.

3. Lenksystem nach Anspruch 1 oder 2, **dadurch gekennzeichnet, dass** in die Platine Leiterbahnen zur Verbindung der jeweiligen elektronischen Komponenten auf den verschiedenen Abschnitten der Platine eingeätzt sind.

4. Lenksystem nach einem der Ansprüche 1 bis 3, **dadurch gekennzeichnet, dass** die Lenkwelle (3) und der Servomotor (7) in einem gemeinsamen Lagergehäuse (8) aufgenommen sind.

5. Lenksystem nach einem der Ansprüche 1 bis 4, **dadurch gekennzeichnet, dass** das Elektronikgehäuse (27) am Lagergehäuse (8) gehalten ist.

6. Lenksystem nach Anspruch 4 oder 5, **dadurch gekennzeichnet, dass** das Lagergehäuse (8) eine Befestigungsplattform (24) zur Befestigung der Elektronikplatine aufweist.

7. Lenksystem nach einem der Ansprüche 1 bis 6, **dadurch gekennzeichnet, dass** die der Stirnseite der Motorwelle (15) des Servomotors (7) axial vorgelagerte Elektronikeinheit (25) einen Rotorlagesensor (22) aufweist, der Teil einer Rotorlagesensorik ist.

8. Lenksystem nach Anspruch 7, **dadurch gekennzeichnet, dass** der Rotorlagesensor (22) als Magnetfeldsensor ausgebildet ist, dem ein an der Stirnseite der Motorwelle (15) angeordnetes Magnetelement (21) zugeordnet ist.

9. Lenksystem nach einem der Ansprüche 1 bis 8, **dadurch gekennzeichnet, dass** die Elektronikeinheit (25) die Steuerungslogik aufweist.

10. Lenksystem nach einem der Ansprüche 1 bis 9, dadurch gekenntzeichnet, dass einteilig mit der Motorwelle (15) des Servomotors (7) ein den Stator (16) des Servomotors axial überragender Wellenabschnitt ausgebildet ist, der Träger einer Schnecke ist, welche mit einem mit der Lenkwelle (3) verbundenen Schneckenrad (20) kämmt.

## Claims

1. Steering system in a vehicle, having a steering shaft (3) for transmitting a steering angle predefined by the driver and having an electric servomotor (7) for generating an assisting driving torque which is coupled to the steering shaft (3), wherein an electronics unit (25) having electronic components for controlling the servomotor (7) is arranged orthogonally with respect to the longitudinal axis of the servomotor (13) and is mounted axially in front of the endside of the motor shaft (15) of the servomotor (7), wherein the electronics unit (25) is accommodated in an electronics housing (27) which is arranged in a fixed position with respect to the servomotor (7), and the electronics housing (27) accommodates power electronics (23) and control electronics (25), **characterized in that** the power electronics (23) and the control electronics (25) are oriented at an angle to one another, and the power electronics (23) and the control electronics (25) are embodied in one piece in the form of a bending circuit board.

2. Steering system according to Claim 1, **characterized in that** the power electronics (23) and the control electronics (25) are oriented at an angle of 90° with respect to one another.

3. Steering system according to Claim 1 or 2, **characterized in that** conductor tracks for connecting the respective electronic components on the various sections of the circuit board are etched into the circuit board.

4. Steering system according to one of Claims 1 to 3, **characterized in that** the steering shaft (3) and the servomotor (7) are accommodated in a common bearing housing (8).

5. Steering system according to one of Claims 1 to 4, **characterized in that** the electronics housing (27) is secured to the bearing housing (8).

6. Steering system according to Claim 4 or 5, **characterized in that** the bearing housing (8) has an attachment platform (24) for attaching the electronics circuit board.

7. Steering system according to one of Claims 1 to 6, **characterized in that** the electronics unit (25) which is mounted axially in front of the end side of the motor shaft (15) of the servomotor (7) has a rotor position sensor (22) which is part of a rotor position sensor system.

8. Steering system according to Claim 7, **characterized in that** the rotor position sensor (22) is embodied as a magnetic field sensor to which a magnetic element (21) which is arranged on the end side of the motor shaft (15) is assigned.

9. Steering system according to one of Claims 1 to 8, **characterized in that** the electronics unit (25) has the control logic.

10. Steering system according to one of Claims 1 to 9, **characterized in that** a shaft section which projects axially beyond the stator (16) of the servomotor is embodied in one piece with the motor shaft (15) of the servomotor (7), and is the carrier of a worm which meshes with a worm gear (20) which is connected to the steering shaft (3).

## Revendications

1. Système de direction dans un véhicule, comprenant un arbre de direction (3) pour le transfert d'un angle de direction prédéfini par le conducteur et un servomoteur électrique (7) pour produire un couple d'entraînement d'assistance, qui est accouplé à l'arbre de direction (3), une unité électronique (25) avec des composants électroniques pour commander le servomoteur (7) étant disposée perpendiculairement à l'axe longitudinal du servomoteur (13) et étant montée axialement avant le côté frontal de l'arbre de moteur (15) du servomoteur (7), l'unité électronique (25) étant reçue dans un boîtier électronique (27) qui est disposé dans une position fixe par rapport au servomoteur (7) et le boîtier électronique (27) recevant une électronique de puissance (23) et une électronique de commande (25), **caractérisé en ce que** l'électronique de puissance (23) et l'électronique de commande (25) sont orientées l'une par rapport à l'autre suivant un certain angle et l'électronique de puissance (23) et l'électronique de commande (25) sont réalisées d'une seule pièce en forme de platine pivotante.

2. Système de direction selon la revendication 1, **caractérisé en ce que** l'électronique de puissance (23) et l'électronique de commande (25) sont orientées suivant un angle de 90° l'une par rapport à l'autre.

3. Système de direction selon la revendication 1 ou 2, **caractérisé en ce que** des pistes conductrices sont gravées dans la platine pour connecter les composants électroniques respectifs aux différentes portions de la platine.

4. Système de direction selon l'une quelconque des revendications 1 à 3, **caractérisé en ce que** l'arbre de direction (3) et le servomoteur (7) sont reçus dans un logement de palier commun (8).

5. Système de direction selon l'une quelconque des revendications 1 à 4, **caractérisé en ce que** le boîtier électronique (27) est retenu sur le logement de palier (8).

6. Système de direction selon la revendication 4 ou 5, **caractérisé en ce que** le logement de palier (8) présente une plate-forme de fixation (24) pour fixer la platine électronique.

7. Système de direction selon l'une quelconque des revendications 1 à 6, **caractérisé en ce que** l'unité électronique (25) montée axialement avant le côté frontal de l'arbre de moteur (15) du servomoteur (7) présente un capteur de position de rotor (22) qui fait partie d'un système de capteurs de position de rotor.

8. Système de direction selon la revendication 7, **caractérisé en ce que** le capteur de position de rotor (22) est réalisé sous la forme d'un capteur de champ magnétique auquel est associé un élément magnétique (21) disposé sur le côté frontal de l'arbre de moteur (15).

9. Système de direction selon l'une quelconque des revendications 1 à 8, **caractérisé en ce que** l'unité électronique (25) présente la logique de commande.

10. Système de direction selon l'une quelconque des revendications 1 à 9, **caractérisé en ce qu'**une section d'arbre dépassant axialement au-delà du stator (16) du servomoteur est réalisée d'une seule pièce avec l'arbre de moteur (15) du servomoteur (7), et le support est une vis sans fin qui s'engrène avec une roue à denture hélicoïdale (20) connectée à l'arbre de direction (3).
